# DEMANDE DE BREVET EUROPEEN

(11) **EP 3 508 058 A1**
(43) Date de publication de la demande: **10.07.2019**
(21) Numéro de dépôt: 19150675.7
(22) Date de dépôt: 08.01.2019
(51) Int. Cl.: A01K 61/77

(54) **PROCEDE ET SYSTEME DE RÉHABILITATION ECOLOGIQUE MARINE**

(30) Priorité: 08.01.2018 FR 1800019
(71) Demandeur: Landreau, Daniel, 06190 Roquebrune Cap Martin (FR)
(72) Inventeur: Landreau, Daniel, 06190 Roquebrune Cap Martin (FR)
(74) Mandataire: Anderson, Angela Mary

(57) **Abrégé**

Une surface sous-marine pour créer un écosystème marin situé dans l'eau dans lequel circule un courant à une vitesse prédéterminée; la surface comprenant un ou plusieurs blocs (100) supportant un ou plusieurs éléments (102; 200; 300) dont chacun s'étend depuis une face du bloc d'une distance prédéterminée et est capable de réduire la vitesse du courant et ainsi de supporter la croissance d'une ou plusieurs espèces marines au voisinage du ou des élément.

## Description

La présente invention concerne un procédé et un système de réhabilitation de l'écologie marine.

Les aménagements portuaires du littoral du monde ont endommagé une surface importante de petits fonds côtiers où s'abritaient autrefois les poissons et d'autres espèces marines.

À la suite de la destruction de l'écosystème marin, de nombreuses études ont été menées sur la façon de concevoir des structures sous-marines pour les rendre proactives pour la biodiversité.

Un objective de la présente invention est de permettre une nouvelle habitation durable pour toutes les formes de vie marine, en particulier lorsque les impacts humains ont eu un effet néfaste sur la biodiversité de l'écosystème environnant.

Selon un aspect de la présente invention, il est fourni une surface sous-marine pour créer un écosystème marin situé dans l'eau dans lequel circule un courant à une vitesse prédéterminée; la surface comprenant un ou plusieurs blocs supportant un ou plusieurs éléments dont chacun s'étend depuis une face du bloc d'une distance prédéterminée et est capable de réduire la vitesse du courant et ainsi de supporter la croissance d'une ou plusieurs espèces marines au voisinage du ou des élément.

De préférence l'élément comprend une pyramide avec une base sur la face du bloc et un point à la distance prédéterminée.

De préférence la pyramide a une base carrée.

De préférence le point est à une distance prédéterminée d'environ 1,8 m du bloc.

De préférence il y a une pluralité de blocs.

De préférence les éléments sont une forme d'un double grillage emprisonnant un substrat.

De préférence les éléments inclus une ou plusieurs poche d'un substrat
De préférence le substrat c'est est adapté pour fournir un environnement pour soutenir et fournir un environnement vivant pour les créatures marines.

De préférence le substrat c'est tel que des coquilles de coquillage, composants diverses.

Selon un aspect de la présente invention, il est fourni un élément à attacher à un bloc pour former une surface sous-marine pour créer un écosystème marin situé dans l'eau dans lequel circule un courant à une vitesse prédéterminée ou l'élément s'étale depuis une face du bloc d'une distance prédéterminée et est capable de réduire la vitesse du courant et ainsi de soutenir la croissance d'une ou plusieurs espèces marines au voisinage de l'élément.

Selon un aspect de la présente invention, il est fourni un procédé de formation d'une surface apte à créer un écosystème marin situé dans l'eau dans lequel circule un courant à une vitesse prédéterminée: le procédé comprenant: former un bloc ayant un visage dessus ; former une pluralité d'éléments sur la face du bloc, dans lequel les éléments s'étendent depuis une face du bloc d'une distance prédéterminée et est capable de réduire la vitesse du courant et ainsi de soutenir la croissance d'une ou plusieurs espèces marines au voisinage de l'élément.

On se référera maintenant au dessin annexé, dans lequel :
Figure 1 une surface artificielle éco-conçue selon un aspect de la présente invention ;
Figure 2 un élément sur la surface artificielle éco-conçue selon un aspect de la présente invention.
Figure 3 des autres éléments pour la surface artificielle éco-conçue selon un aspect de la présente invention.

Un programme expérimental innovant a été imaginé pour recréer certaines fonctionnalités du port détruites par ces aménagements. Il s'agit essentiellement de retrouver la fonction de nourricerie et d'habitat qui favorisent la vie marine.

La présente invention propose un système de lestage d'ouvrages sous-marins, associé à une fonction d'habitat pour la flore et les faunes marines.

Il est conçu pour que l'impact, par exemple, des canalisations marins sur l'environnement naturel soit minimal et que les installations deviennent bénéfiques pour le milieu marin en créant de nouveaux environnements pour la vie marine. Les caractéristiques géométriques et structurelles de l'invention en termes de conception, dimensions, volume, matériaux de construction, servent deux objectifs principaux:

- assurer la stabilité hydrodynamique de la canalisation sur le fond marin (gonflement des tempêtes, courants de cisaillement), sa durabilité et la faisabilité de la mise en oeuvre, du maintien et du développement de la biodiversité;

- fournir un abri aux espèces marines locales: reproduction, habitat, pépinières. Tout en s'intégrant dans l'environnement, ils améliorent la résilience écologique de l'environnement marin (en augmentant les espèces et les habitats) et restaurent le fond de corail endommagé (envasement, surpêche, destruction mécanique).

Par conséquent, ils augmenteront la capacité des ouvrages du port à accueillir des poissons juvéniles. Un programme de réhabilitation écologique durable du littoral est le résultat de la présente invention.

Une idée est de développer ces micro-récifs, potentielles zones de nurseries pour les juvéniles (bébés poissons), par exemple, sous les bouées de balisage ou associe avec d'un ponton fixe. L'invention pourrait également fournir l'implantation de récifs artificiels "de loisirs", adaptés à la plongée, pour mieux protéger les sites coralligènes très riches.

Dans un exemple de la présente invention, il est prévu de fournir une structure sous-marine qui peut fournir un environnement habitable et durable pour l'habitat et l'alimentation de la vie marine.

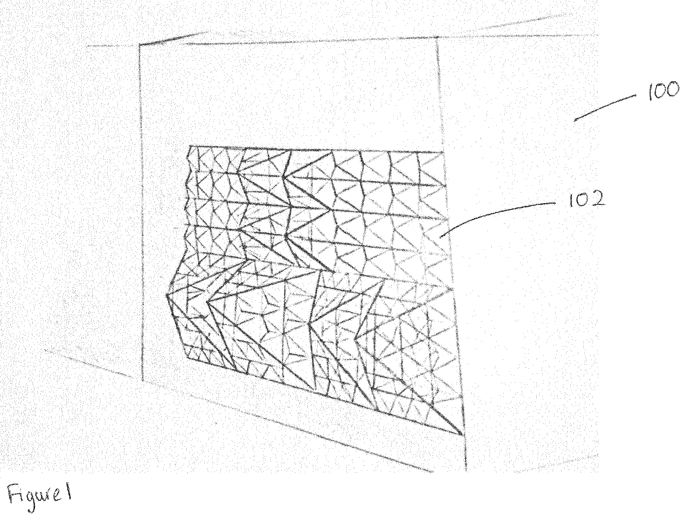

Se référant à la figure 1, le système comprend un grand bloc submersible 100 (également appelé caisson) sur lequel est fixée une pluralité d'éléments 102 qui sont adaptés pour supporter la croissance d'organismes marins et ainsi constituer un habitat et une source de nourriture pour eux-mêmes et d'autres formes de vie marine. Un certain nombre de blocs ou de caissons pourraient être assemblé pour former une surface artificielle éco-conçue comme une barrière ou un mur marin.

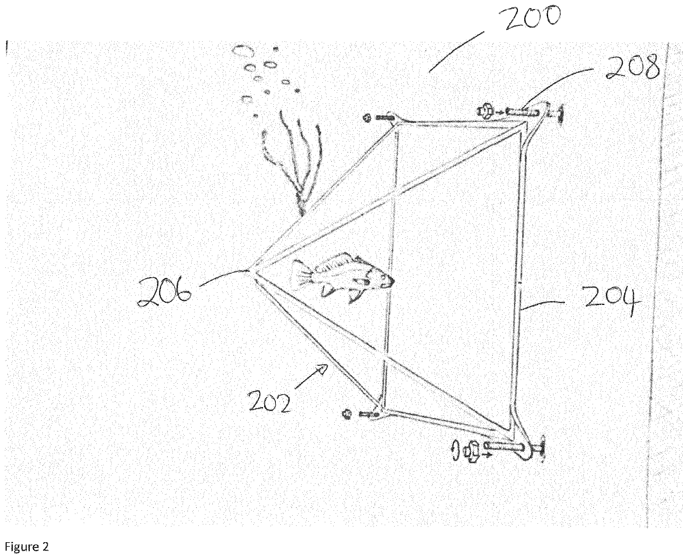

Se référant à la figure 2, les éléments 200 prendre la forme de base choisie est une forme de pyramide régulière 202 à base carré 204, dont la pointe 206 serait arrondi pour la sécurité des plongeurs et des coques de bateau. Cette pyramide pouvant atteindre approximativement 1.80 m de hauteur sera constituée uniquement de ses arrêtes pour une grande majorité. Mais certaines se verraient couvertes sur leur face supérieure. Ceci conférera à ces figures la capacité d'une très faible rétention des sédiments. Un autre point positif est de diviser la vélocité des courants, chaque arrête divisera par deux la vitesse. Cette diminution de vitesse favorisera l'implantation des algues et de certaines plantes tout en permettant une très bonne oxygénation de la zone. Cette structure reproduira des conditions similaires aux épaves de bateaux qui deviennent des espaces très riches en biodiversité. Cet espace sera multi-rôle pouvant aller de la pouponnière pour les poissons aux abris, mais également servir de frayères à la base de la façade.

Les éléments sont faits d'un matériau métallique tel que fer, aluminium, plastique ou autres matériels synthétiques ou de autre matériel comme une maille ou un filet fait d'un métal ou d'un matériau synthétique. La base peut avoir une autre forme qu'un carré et le point peut être à d'autres hauteurs. La surface globale de la paroi artificielle peut être plate, la pyramide s'étendant de la même distance approximative. En variante, la surface du bloc peut être ondulée ou avoir une forme prédéterminée. Les éléments peuvent être de la même taille que les éléments de taille différente sur la surface, donnant ainsi une forme ou une ondulation particulière. La forme et la taille de la paroi peuvent être ajustées selon les besoins pour des raisons d'ajustement, mais aussi pour des raisons esthétiques.

Quatre tiges 208 de métal filetées peu oxydables fixeront le dispositif à la façade du caisson, soit une tige à chaque angle de la base carrée, ce qui permettra une mise en place relativement aisée. D'autres fixations peuvent être utilisées au besoin. Le choix d'un matériau métallique permet une structure suffisamment solide face au courant et à la houle. Certaines unités seront recouverte d'une surface opaque ne laissant pas passer les rayons du soleil et permettant l'implantation d'organismes évoluant dans une obscurité relative. On peut imaginer pour cette surface opaque un matériau solide et rugueux, permettant l'accrochage de nombreux organismes générateurs de bio-structures tels que les polypes, les algues ou les crustacés. L'idéal serait un matériau de carrière duquel certains organismes peuvent dissoudre et extraire un substrat calcique, comme peuvent le faire certaines espèces endémiques. Mais la durabilité dans le temps de ce type de d'assemblage (métal-roche) représente un défi d'ingénierie coûteux. Une solution alors plus économe est de réaliser un maillage fin du métal sur la partie supérieure de la pyramide, afin que la fixation successive des organismes produise, à terme, une surface opaque et très probablement constitué d'un substrat calcique.

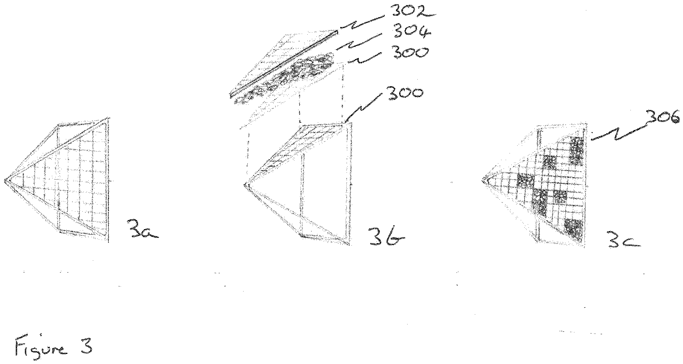

Comme le montre la figure 3, d'autres formes d'éléments triangulaires peuvent être utilisées. Sur la figure 3a, l'élément peut comprendre une unité triangulaire ayant une cote fermée grâce à un grillage de mailles variables. Sur la figure 3b, l'élément peut comprendre une unité triangulaire ayant un côté fermer grâce à un double grillage (300, 302) emprisonnant un substrat (304) tel que des coquilles de coquillage, composants diverses. Sur la figure 3c, l'élément peut comprendre une unité triangulaire ayant un côté fermer grâce à un double grillage emprisonnant en petite poche (306) un substrat tel que des coquilles de coquillage, composants diverses. Le substrat c'est adapté pour fournir un environnement pour soutenir et fournir un environnement vivant pour les créatures marines.

Les éléments ont pour effet de réduire le débit de l'eau au voisinage de celle-ci. En conséquence, les sédiments dans l'eau peuvent se déposer plus facilement que cela n'aurait été le cas si le débit n'avait pas été ralenti. Comme les sédiments peuvent s'installer plus facilement la vie marine conglomère aussi dans et autour de l'élément. Au fil du temps, l'élément devient imprégné d'algues et d'autres espèces marines et une accumulation progressive de matières marines se produit. Cela fournit à son tour une source de nourriture et un habitat pour la vie marine qui s'attache à l'élément et aussi pour les poissons et autres espèces marines dans le voisinage. L'accumulation progressive de l'écosystème est encouragée par le mur artificiel et les éléments qui s'y trouvent et une plus grande biodiversité est atteinte dans la zone.

Le bloc et les éléments du système sont représentés comme des formes particulières et tailles à titre d'exemple, d'autres formes et tailles tant pour le bloc et les éléments sont possibles.

Évidemment, une prédiction optimiste sur la reprise d'un écosystème marin riche n'est pas raisonnable si l'on ne tiens pas compte la qualité de l'eau. Or, l'activité de plaisance de cette zone est, et restera intense. D'où une émission régulière de particules cytotoxiques.

La technique choisit pour préparer ces caissons s'organise de la manière suivante :
- Hors de l'eau, le radier de chaque caisson et les dix premiers mètres de voile béton par un coffrage glissant sont réalisés,
- Sous le poids du caisson en cours de construction, le pont du caissonnier est progressivement immergé permettant ainsi de finaliser le coulage des voiles bétons,
- Le caisson est ensuite mis en flottaison et sorti du caissonnier pour être remorqué jusqu'au poste où seront réalisés les poteaux béton constituant le mur « brise vague » appelé l'ouvrage JARLAN.

Une autre étape est la pose de la ceinture de caissons. Après une analyse par le bureau d'étude de la SAIPEM, il a été conclu que la pose d'une rangée d'énormes caissons trapézoïdaux en bétons armé de 26m de hauteur et de 10 000tonnes chacun, sur une rangée de 18unités, était la méthode de connexion la plus appropriée à un tel édifice. Cette ceinture compacte devra constituer le prolongement du littoral existant. Ils seront transportés et disposés par une barge possédant une grue de levage.

Dans une situation idéale les sédiments dragués doivent être dépollués. Évidemment, il convient également de ne rejeter en mer aucun produit cytotoxique supplémentaire.

Une augmentation de la turbidité de l'eau est également à surveiller de près, car elle peut nuire gravement à la vie de micro et macro organismes évoluant dans la zone pélagique. À chaque étape du chantier il faudra donc s'entourer de précautions visant à ne pas dépasser un niveau précis de turbidité. Quitte à stopper temporairement les travaux en cas de dépassement du seuil de tolérance.

Au regard de cette contrainte, le dragage de sédiments ne représentant pas un danger toxique ainsi que sa destination finale doit être soigneusement étudiée, et contrôlée.

Les pollutions lumineuses devront être limitées également par une utilisation modérée et raisonnée des projecteurs lors des travaux de nuit. Elles sont en effet une cause de mortalité importante pour un grand nombre de petits organismes.

Également, pour effectuer le remblai d'environ 1.2 Millions de m3 délimités par la digue, des matériaux devront être apportés. Lors de l'utilisation de ce matériau semi liquide, il n'est pas envisageable de déverser l'excédent d'eau dans l'environnement marin local.

De plus, un certain nombre de défis techniques doivent être surmontés pour la conception de la structure elle-même. En effet, l'ensemble de la super structure doit être stable et solide face à tout aléa sismique. De plus la surface présentée à la mer doit être brise-houle et résistante à l'érosion.

Le travail presque exclusivement en mer, sur engins flottants, rends l'exécution des manoeuvres ouvrières relativement difficiles et dépendantes d'une météo favorable.

Enfin, c'est sans doute la reprise d'une biocénose équilibrée et représentative d'un littoral sur ce biotope totalement artificiel qui sera sûrement la condition la plus difficile à satisfaire

Afin de situer le système selon la présente invention, il est nécessaire d'effectuer certains travaux préparatoires pour rendre le site approprié au positionnement et à l'installation du système.

Une première technique charge des sédiments pollués sur benne étanche pour les transporter à une location prédéfinie afin de les traiter. La seconde concerne les sédiments non pollués qui seront aspirer par la technique de dragage souille sans rejet de l'eau accumulé. Ces sédiments sont acheminés par bateau à environ 2km de la côte à des coordonnées précises dans un périmètre de 300m/300m, cette position assure qu'il n'y aura pas de risque d'envoyer des sédiments dans l'eau.

La troisième technique est appelée « fall pipe vessel » doit permettre de stabiliser le fond par dépôt de matériaux de carrières dans une location et de créer un sol stable et aplani servant d'appui solide pour la pose des caissons.

En effet, cette technique permet d'aspirer l'eau en profondeur sans la rejeter puis de placer une ceinture de rocher avec une extrême précision. L'eau aspirer est emmagasiné puis envoyer dans un centre de traitement et de revalorisation.

La dernière technique intéressante est une décantation d'un matériau semi-solide (boues) en guise de remblai. L'eau résiduel encore chargée en particule est aspirée par une pompe et n'est pas rejeté dans le milieu. On a donc un remblai constitué de particules de taille hétérogènes opposant une très bonne résistance au tassement.

Pour chaque actions réalisées, un filet peut-être servir d'écran anti-turbidité.

Comme précédemment expliqué, la biodiversité de un espace est fragile et est soumis à des contraintes, tels que :
- Un fort dénivelé
- Zone qui va casser la houle
- Des courants marins nombreux et souvent de forte intensité -Un fort transport de sédiments
- Zone ayant une forte turbidité (Particules en suspensions)
- Pour le cas du grand mérou noir (Epinephelusmarginatus). Il a besoin de se cacher dans les anfractuosités de la roche se trouvant entre 5 à 100 mètres de profondeur et il mesure jusqu'à 1,5m.
- Pour le cas du Corb (Sciaenaumbra). On le retrouve souvent près des grottes et il mesure jusqu'à 75 cm.

Suite à ces critères, il semble nécessaire d'avoir à une forme permettant une faible rétention des sédiments, tous en cassant la vitesse des courants, ce qui permet aux plantes sous-marines de s'y installer. Cette forme serait facilement mise en place sur les caissons et permettrait de recréer des grottes pouvant accueillir des espèces de poissons pouvant atteindre 1,5 m.

Il sera reconnu que l'invention est décrite à titre d'exemples et d'autres éléments et éléments de structures peuvent également faire partie de l'invention.

## Revendications

1. Une surface sous-marine pour créer un écosystème marin situé dans l'eau dans lequel circule un courant à une vitesse prédéterminée; la surface comprenant un ou plusieurs blocs supportant un ou plusieurs éléments dont chacun s'étend depuis une face du bloc d'une distance prédéterminée et est capable de réduire la vitesse du courant et ainsi de supporter la croissance d'une ou plusieurs espèces marines au voisinage du ou des élément.

2. Surface selon la revendication 1, dans laquelle l'élément comprend une pyramide avec une base sur la face du bloc et un point à la distance prédéterminée.

3. Surface selon la revendication 2, dans laquelle la pyramide a une base carrée.

4. Surface selon la revendication 2 ou la revendication 3, dans laquelle le point est à une distance prédéterminée d'environ 1,8 m du bloc.

5. Surface selon l'une quelconque des revendications précédentes, dans laquelle il y a une pluralité de blocs.

6. Surface selon l'une quelconque des revendications précédentes dans laquelle les éléments sont une forme d'un double grillage emprisonnant un substrat.

7. Surface selon dans laquelle l'une quelconque des revendications précédentes dans laquelle les éléments inclus une ou plusieurs poche d'un substrat

8. Surface selon la revendication 6 ou 7 dans laquelle, le substrat c'est est adapté pour fournir un environnement pour soutenir et fournir un environnement vivant pour les créatures marines.

9. Surface selon la revendication 8 dans laquelle, le substrat c'est tel que des coquilles de coquillage, composants diverses.

10. Un élément à attacher à un bloc pour former une surface sous-marine pour créer un écosystème marin situé dans l'eau dans lequel circule un courant à une vitesse prédéterminée ou l'élément s'étale depuis une face du bloc d'une distance prédéterminée et est capable de réduire la vitesse du courant et ainsi de soutenir la croissance d'une ou plusieurs espèces marines au voisinage de l'élément.

11. Procédé de formation d'une surface apte à créer un écosystème marin situé dans l'eau dans lequel circule un courant à une vitesse prédéterminée: le procédé comprenant:
a. former un bloc ayant un visage dessus
b. former une pluralité d'éléments sur la face du bloc, dans lequel les éléments s'étendent depuis une face du bloc d'une distance prédéterminée et est capable de réduire la vitesse du courant et ainsi de soutenir la croissance d'une ou plusieurs espèces marines au voisinage de l'élément.
